# EUROPÄISCHE PATENTANMELDUNG

(11) **EP 0 723 823 A1**
(43) Veröffentlichungstag der Anmeldung: **31.07.1996**
(21) Anmeldenummer: 96100596.4
(22) Anmeldetag: 17.01.1996
(51) Int. Cl.: B09C 1/08, B09C 1/06, A62D 3/00

(54) **Verfahren zur Sanierung von Böden und Altlasten**

(30) Priorität: 30.01.1995 DE 19502814
(71) Anmelder: H.C. Starck GmbH & Co. KG, D-38642 Goslar (DE)
(72) Erfinder: Gutknecht, Wilfried, Dr., D-38642 Goslar (DE); Mathy, Wolfgang, D-38685 Langelsheim (DE); Weigert, Gerhard, D-38640 Goslar (DE)
(74) Vertreter: Steiling, Lothar, Dr.

(57) **Zusammenfassung**

Die vorliegende Erfindung betrifft ein Verfahren zur Sanierung von mit wasserlöslichen Chromat-Verbindungen verunreinigten Materialien, wie Böden und Altlasten, durch Behandlung mit Reduktionsmitteln.

## Beschreibung

Die vorliegende Erfindung betrifft ein Verfahren zur Sanierung von mit wasserlöslichen Chromat-Verbindungen verunreinigten Materialien, wie Böden und Altlasten, durch Behandlung mit Reduktionsmitteln.

CrO₄²⁻-Ionen in Böden und Altlasten stellen eine Gefahr für das Grundwasser dar. In Industriegebieten, insbesondere auf alten Industriebrachen, finden sich häufig derartige Altlasten aus ehemaligen galvanischen Betrieben oder von Farbpigment-Herstellern. Je nach Beschaffenheit der Böden werden die Chromate mehr oder weniger stark gebunden, so daß ein einfaches Auswaschen der Böden kaum zu ausreichenden Reinigungseffekten führt, zumal einige Chromate in Wasser relativ schwer löslich sind (z.B. BaCrO₄, PbCrO₄). In kalkhaltigen Böden bildet sich das ebenfalls schwerlösliche CaCrO₄. Langfristig werden aber immer CrO₄²⁻-Ionen an das Grundwasser abgegeben.

Um CrO₄²⁻-haltige Böden zu sanieren, wendet man nach dem Stand der Technik Verfahren an, die das schädliche Cr(VI) in das unbedenkliche Cr(III) überführen. Sanierungen von CrO₄²⁻-haltigen Böden sind allerdings noch nicht lange in Anwendung. Bekannt ist ein Verfahren unter Einsatz von Fe(II)-Sulfat-Lösungen bzw. Fe(II)-haltiger Restsäure. Dieses naßchemische Verfahren ist in "Industry and Environment", Vol. 12, Issue 1, p. 51-56 beschrieben. Weil hierbei allerdings nur Cr(III)-hydroxid bzw. lösliche Cr(III)-salze entstehen, ist eine Reoxidation der behandelten Stoffe zu Cr(VI) nicht auszuschließen. Damit ist diese Methode nicht ausreichend sicher. Von Nachteil sind dabei ferner die Abwässer, die infolge einer naßchemischen Reaktion anfallen.

Es war daher die Aufgabe der vorliegenden Erfindung, die Umwandlung der CrO₄²⁻-Ionen einfacher und effektiver zu gestalten und die Umwandlungsprodukte nach Möglichkeit mineralisch zu fixieren und löseresistent zu machen.

Es wurde nun gefunden, daß diese Aufgabe gelöst werden kann durch ein Verfahren zur Sanierung von mit wasserlöslichen Chromat-Verbindungen verunreinigten Materialien, wie Böden und Altlasten, durch Behandlung mit Reduktionsmitteln, wobei die chromathaltigen Materialien mit mindestens der zur Reduktion von Cr(VI) zu Cr(III) benötigten stöchiometrischen Menge an Reduktionsmitteln versetzt und bei 700 bis 1200°C, vorzugsweise bei 800 bis 1100°C, thermisch behandelt werden. Ein solches Verfahren ist Gegenstand dieser Erfindung.

Vorzugsweise werden als Reduktionsmittel kohlenstoffhaltige Materialien eingesetzt. Besonders bevorzugt können dabei als kohlenstoffhaltige Materialien Kohle, Erdöl, Kohlenwasserstoffe, Erdgas, Polymere, Kunststoffe, Holzspäne und/oder entsprechende biologisch-organische Materialien eingesetzt werden. Dabei wird das Reduktionsmittel üblicherweise vor oder während der thermischen Behandlung zugegeben. Bei humushaltigen Böden kann jedoch der Zusatz von Reduktionsmitteln entfallen. Durch die hohe Temperatur wird das entstehende Cr(III) mineralisch fixiert als Cr₂O₃ oder als Spinelle wie z.B. Ca- oder Mg-Spinell. In dieser Form ist das Cr(III) unter normalen Bedingungen in natürlichen Böden nicht reoxidierbar.

Im allgemeinen stehen zur Sanierung Materialien aus Altlasten mit einigen Prozenten Chrom als Cr(VI) an. Organische Stoffe sind meistens nur geringfügig darin enthalten. Das Material enthält meist noch bis zu 30 % Wasser. Zu diesem Material wird vorteilhaft soviel kohlenstoffhaltige Substanz zugemischt, daß ein ausreichender stöchiometrischer Überschuß vorhanden ist; in der Praxis genügen beispielsweise ca. 5 % Holzspäne (Sägemehl). Diese Mischungen werden bei Temperaturen bis 1200°C in geschlossenen Systemen geglüht. Die Behandlungszeit beträgt bevorzugt 10 Minuten bis eine Stunde. Es wurde gefunden, daß das Cr(VI) bei 1000°C bereits nach 10 bis 15 Minuten vollständig reduziert ist. Ein nachfolgendes Glühen unter Luftsauerstoff bewirkt dann keine Reoxidation des Cr(III) zu Cr(VI). Es kann davon ausgegangen werden, daß dann das Chrom in schwerlöslichen Verbindungen wie z.B. Spinellen fixiert vorliegt.

Wie aus den Tabellen 1 und 2 ersichtlich ist, führt zwar die thermische Behandlung der Cr(VI)-haltigen Materialien bei einer Temperatur von 900°C in geschlossenen Systemen (Tabelle 1) zu befriedigenden Reduktionsergebnissen, in offenen Systemen in Gegenwart von Luftsauerstoff besteht allerdings die Gefahr der Reoxidation des Cr(III) zu Cr(VI), was sich in erhöhten Eluatwerten ausdrückt (Tabelle 2).

Für die technische Durchführung bietet sich an, einen Drehrohrofen zu verwenden, wobei es gewährleistet sein muß, daß das Material mindestens 10 Minuten einer Temperatur von 1000°C unter reduzierenden Bedingungen ausgesetzt ist. Ein indirekt beheizter Drehrohrofen ist dabei von Vorteil im Hinblick auf die Möglichkeit, eine reduzierende Atmosphäre zu halten.

Im folgenden wird die Erfindung beispielhaft erläutert, ohne daß hierin eine Einschränkung zu sehen ist.

### Beispiel 1 (Vergleich)

### Waschversuch mit Wasser:

Ein mit Chromat kontaminiertes Ausgangsmaterial, eine kalkreiche Probe einer vorhandenen Altlast mit 2,75 % Cr, 24 % Ca, 25 % CO₃, 8 % Mg, 2,5 % Al, 4,3 % Fe, 0,3 % Na und 30 % H₂O und einem Chrom(VI)-Eluatwert nach DIN 38 414 von ca. 100 mg/l wurde zunächst mit Wasser gewaschen. Hierzu wurden 100 g Originalmaterial mit 11 Wasser 1 Stunde lang bei Raumtemperatur gerührt und filtriert. Der Rückstand wurde noch zweimal mit je 1 l Wasser gerührt. Das erste Waschwasser enthielt 170 mg Cr(VI) pro Liter, das zweite Waschwasser 110 mg Cr(VI) pro Liter und das dritte Waschwasser 30 mg Cr(VI) pro Liter. Der getrocknete Rückstand wurde abschließend auf lösliches Chromat untersucht. Der Eluatwert nach DIN 38 414 betrug 62 mg Cr(VI) pro Liter.

### Beispiel 2 (erfindungsgemäß)

### Thermische Reduktion:

Das Ausgangsmaterial gemäß Beispiel 1 wurde mit 5 Gew.-% Holz-Sägespänen gemischt und 1 Stunde lang bei 1000°C im bedeckten Tiegel geglüht. Der Eluatwert des erkalteten Produktes nach DIN 38 414 betrug <0,025 mg Cr(VI) pro Liter, feucht gealtert nach ca. 4 Wochen 0,06 mg Cr(VI) pro Liter.

Parallelversuche mit kürzeren Behandlungszeiten bei 900°C führten zu dem Resultat, daß bei dieser Temperatur bereits nach 15 Minuten ein befriedigendes Resultat erzielt wurde (siehe Tabelle 3).

### Beispiel 3 (erfindungsgemäß)

### Versuch mit kohlenstoffhaltigen Bestandteilen:

Eine humushaltige Gartenerde, die mit 1 % Cr(VI) (als K₂Cr₂O₄) künstlich kontaminiert worden war, wurde in einem geschlossenen Schamott-Tiegel 10 Minuten lang ohne Zusätze bei ca. 1000°C behandelt. Die Elutionswerte des Röstproduktes auf Chromat-Ionen nach DIN 38 414, Teil 4, lagen nach der thermischen Behandlung bei <0,025 mg Cr(VI) pro Liter.

Bei einem analogen Versuch bei Temperaturen <700°C und nach einer Alterung des Produktes (4 Wochen an feuchter Luft gelagert) stiegen die Elutionswerte für das Produkt bis auf 1 mg Cr(VI) pro Liter an. Hingegen blieben sie nach der Temperaturbehandlung bei 1000°C unter 0,05 mg Cr(VI) pro Liter.

Die Verlängerung der Behandlungsdauer von 10 auf 15 Minuten bewirkte hier keine Verringerung der Elutionswerte.

### Beispiel 4 (Vergleich, Behandlung mit Fe(II)-sulfat)

Das Ausgangsmaterial gemäß Beispiel 1 wurde in einer schwefelsauren 5 %igen Fe(II)-sulfat-Lösung suspendiert und in einer Reibschale verrieben. Der Eluatwert der getrockneten Substanz betrug nach DIN 38 414 5,4 mg Cr(VI) pro Liter.

Dieses Material ergab nach 10 Tagen feuchter Alterung einen Eluatwert nach DIN 38 414 von 8,0 mg Cr(VI) pro Liter.

Die Tabellen 1 und 2 veranschaulichen die Ergebnisse der Versuche:

**Tabelle 1**

| Eluatwerte nach Glühen im geschlossenen Tiegel (15 Minuten) | |
|---|---|
| Temperatur (°C) | mg/l Cr VI |
| 700 | 120 |
| 800 | 1,3 |
| 900 | 0,029 |
| 1000 | <0,026 |

**Tabelle 2**

| Eluatwerte nach Glühen im offenen Tiegel (15 Minuten) | |
|---|---|
| Temperatur (°C) | mg/l Cr VI |
| 700 | 120 |
| 800 | 9,6 |
| 900 | 3,1 |
| 1000 | 0,11 |

**Tabelle 3**

| Eluatwerte nach Glühen bei 900°C im geschlossenen Tiegel | |
|---|---|
| Zeit (min) | mg/l Cr VI |
| 10 | 0,26 |
| 15 | 0,029 |
| 30 | 0,025 |

## Patentansprüche

1. Verfahren zur Sanierung von mit wasserlöslichen Chromat-Verbindungen verunreinigten Materialien, wie Böden und Altlasten, durch Behandlung mit Reduktionsmitteln, dadurch gekennzeichnet, daß die chromathaltigen Materialien mit mindestens der zur Reduktion von Cr(VI) zu Cr(III) benötigten stöchiometrischen Menge an Reduktionsmitteln versetzt und bei 700 bis 1200°C, vorzugsweise bei 800 bis 1100°C, thermisch behandelt werden.

2. Verfahren gemäß Anspruch 1, dadurch gekennzeichnet, daß als Reduktionsmittel kohlenstoffhaltige Materialien eingesetzt werden.

3. Verfahren gemäß einem der Ansprüche 1 oder 2, dadurch gekennzeichnet, daß als kohlenstoffhaltige Materialien Kohle, Erdöl, Kohlenwasserstoffe, Erdgas, Polymere, Kunststoffe, Holzspäne und/oder entsprechende biologisch-organische Materialien eingesetzt werden.

4. Verfahren gemäß einem oder mehreren der Ansprüche 1 bis 3, dadurch gekennzeichnet, daß das Reduktionsmittel vor oder während der thermischen Behandlung zugegeben wird.

5. Verfahren gemäß einem oder mehreren der Ansprüche 1 bis 4, dadurch gekennzeichnet, daß die thermische Behandlung in einem Drehrohrofen durchgeführt wird.

6. Verfahren gemäß Anspruch 5, dadurch gekennzeichnet, daß die thermische Behandlung in einem indirekt beheizten Drehrohrofen in reduzierender Atmosphäre durchgeführt wird.
